# EUROPÄISCHE PATENTANMELDUNG

(11) **EP 3 714 961 A1**
(43) Veröffentlichungstag der Anmeldung: **30.09.2020**
(21) Anmeldenummer: 19165652.9
(22) Anmeldetag: 27.03.2019
(51) Int. Cl.: B01D 53/08, B01D 53/68, B01D 53/83

(54) **ABSCHEIDUNG VON SCHADSTOFFEN, INSBESONDERE VON SCHWERMETALLEN UND QUECKSILBER MITTELS WANDERBETTADSORBER**

(71) Anmelder: Steinmüller Engineering GmbH, 51643 Gummersbach (DE); IEM FörderTechnik GmbH, 95506 Kastl (DE)
(72) Erfinder: Rasche, Dorian, 51643 Gummersbach (DE); Schadow, Uwe-Paul, 51643 Gummersbach (DE); Schütze, Jan, 95506 Kastl (DE)
(74) Vertreter: Godemeyer Blum Lenze Patentanwälte Partnerschaft mbB - werkpatent

(57) **Zusammenfassung**

Die Erfindung betrifft eine Reinigungsvorrichtung und ein Verfahren zur Abscheidung von Schadstoffen, insbesondere Schwermetall und/oder Schwermetallverbindungen, insbesondere Quecksilber und/oder Quecksilberverbindungen, aus Verbrennungsgasen 3, umfassend eine Filtereinrichtung enthaltend einen oder mehrere Wanderbettadsorber 20, wobei der Wanderbettadsorber 20 eingerichtet ist, von oben nach unten von Adsorbens 2 durchlaufen zu werden, und in Kreuzstromfahrweise von den Verbrennungsgasen (3) durchströmt zu werden, wobei erfindungsgemäß der Wanderbettadsorber 20 mindestens ein von Adsorbens 2 durchlaufenes Filterbett 1 aufweist, das anströmseitig und abströmseitig von Feingittern 11 begrenzt ist.

## Beschreibung

Die Erfindung betrifft eine Reinigungsvorrichtung zur Abscheidung von Schadstoffen, insbesondere Schwermetall und/oder Schwermetallverbindungen, insbesondere Quecksilber und/oder Quecksilberverbindungen, aus Verbrennungsgasen, umfassend eine Filtereinrichtung enthaltend einen oder mehrere Wanderbettadsorber, wobei der oder die Wanderbettadsorber eingerichtet ist bzw. sind, von oben nach unten von Adsorbens durchlaufen zu werden, und in Kreuzstromfahrweise von den Verbrennungsgasen durchströmt wird/werden. Die Erfindung betrifft weiterhin ein Verfahren zur Abscheidung von Schadstoffen, insbesondere Schwermetall und/oder Schwermetallverbindungen, insbesondere Quecksilber und/oder Quecksilberverbindungen, aus Verbrennungsgasen unter Verwendung der genannten Reinigungsvorrichtung.

Das in der Kohle, insbesondere Rohbraunkohle, geringfügig enthaltene Quecksilber wird nach dem im Kessel beispielsweise von Kohlekraftwerken stattfindenden Verbrennungsprozess als elementares Quecksilber Hg⁰ und als oxidiertes (ionisches) Quecksilber Hg²⁺ im Verbrennungsgas gebunden. Nicht oxidiertes, elementares Quecksilber Hg⁰ ist durch die dem Dampferzeuger nachgeschaltete Rauchgasreinigung praktisch nicht auswaschbar. Dagegen ist das oxidierte (ionische) Quecksilber Hg²⁺ gut wasserlöslich und daher stellt die Rauchgasreinigung im Stand der Technik bereits eine wirksame Quecksilber-Senke im Prozess dar. Der Anteil an elementarem Quecksilber im Rauchgas bestimmt somit im Wesentlichen die Hg-Emission der Anlagen.

Im Jahr 2019 sind die bisherigen Grenzwerte für Quecksilber im Abgas von Kohlekraftwerken von 30 (im Tagesmittel) auf 10 µg/Nm³ (tr. 6% O₂) im Jahresmittel herabgesetzt worden. Mit Umsetzung der BREF-Dokumente (2021) in die deutsche Gesetzgebung sind derzeit Grenzwerte für Quecksilber (Hg) für die Abgasemissionen im Bereich <1-7 µg/Nm³ tr. 6% O₂ im Jahresmittel in der Diskussion. In der Zukunft ist mit einer stufenweisen Herabsetzung der Hg-Grenzwerte zu rechnen.

Die meisten kohlegefeuerten Kraftwerke sind derzeit nicht mit speziellen Hg-Minderungstechnologien ausgestattet. Die bisherige Hg-Abscheidung erfolgt über bereits bestehende Abgasreinigungseinrichtungen, wie dem SCR-Katalysator (verbesserte Oxidation), dem Staubfilter (durch Zugabe von Adsorbens) und der nassen Rauchgasentschwefelungsanlage (REA) etwas durch Zugabe von Fällungs-, Komplexierungsmitteln oder Adsorbens. Je nach Anlagenkonfiguration und Brennstoffzusammensetzung werden über die Gesamtanlage aktuell Hg-Abscheideraten im Bereich von 20-80 % erzielt.

Zur Reinigung von Verbrennungsgasen bei Müllverbrennungsanlagen wird im Stand der Technik häufig eine Adsorption für eine selektive Abscheidung von flüchtigen Schwermetallen, insbesondere Quecksilber (Hg), Dioxinen und Furanen, eingesetzt. Dabei handelt es sich um ein thermisches Trennverfahren, bei dem bestimmte Komponenten aus dem Rauchgas, vorwiegend organische Verbindungen, an der Oberfläche grenzflächenaktiver Feststoffe aufgenommen werden. Bei der Rauchgas-Reinigung in Müllverbrennungsanlagen wird als Adsorbens in der Regel Kohlenstoff eingesetzt, und zwar in Form von Aktivkohle oder Herdofenkoks. Bei Adsorbern in der Rauchgas-Reinigung wird das Adsorbens in Gehäusen untergebracht, durch die das beladene, zu reinigende Verbrennungsgas geleitet wird. Neben statischen Adsorbern, sogenannten Festbettadsorbern, die diskontinuierlich in Abwechslung mit einer Regeneration betrieben werden, kommen heute häufig kontinuierlich durchströmte Wanderbettadsorber zum Einsatz, durch die das Rauchgas entweder im Kreuz- oder Gegenstrom geleitet wird. Weiterhin können auch Flugstrom- oder Wirbelschichtadsorber eingesetzt werden, bei denen das Adsorbens mit dem Gasstrom mitgetragen wird oder turbulent auf einem Rost wirbelt.

Die filterbasierte Adsorptionstechnik ist Stand der Technik in z.B. Müllverbrennungsanlagen. Hier wird diese Technik in der Regel als Tail-End-Anlage verwendet, um eventuelle noch vorhandenen Schadstoffe aus dem Verbrennungsgas zu entfernen. Da diese Anlagen in der Regel eine zusätzliche Sicherheitsfunktion darstellen, werden sie oft auch als Polizeifilter beschrieben.

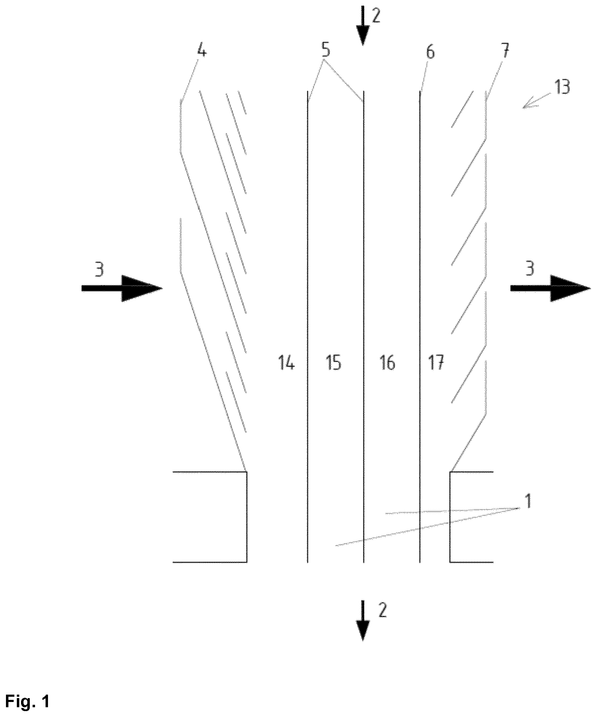

In bestehenden Anlagen wird der Filter im Kreuzstrom durchströmt. Die Dokumente WO 90/09839 A1 und EP 0 198 133 beschreiben die grundlegende Bauweise des herkömmlichen Typs von Wanderbettadsorbern, die mit Eintritts- und Austrittsjalousien für das Verbrennungsgas versehen sind. Die in den genannten Dokumenten beschriebenen Filter weisen lediglich ein Filterbett auf. In Figur 1 dieser Anmeldung ist ein Wanderbettadsorber dargestellt, der typischerweise vier Bereiche bzw. Wanderbette/Filterbette aufweist. Den Eintrittsjalousien folgt der erste Bereich, in dem nur sehr wenig Adsorbens vorhanden ist. Der Hauptteil des Adsorbens wird durch Quadratlochbleche im zweiten und dritten Teil des Filters gehalten. Diese beiden Bereiche stellen den eigentlichen Filter da. Durch verschieden schnelle Durchflussraten wird die Abscheideeffizienz bzw. der Abscheideort bestimmt. Durch die Quadratlochbleche wird 90 bis 99,9 % des Adsorbens in diesem Bereich gehalten. Austretendes Adsorbens wird in den äußeren beiden Bereichen, hier dem ersten und dem vierten Bereich, gesammelt. Die Trennung zwischen Adsorbens und Verbrennungsgas geschieht in erster Line schwerkraftbedingt, da an den Austrittsjalousien das Gas austreten kann und die schwereren Adsorbenspartikel "zurückrollen". Dieses "Zurückrollen" kann nur bei sehr geringen Durchströmungsgeschwindigkeiten des zu reinigenden Abgases sichergestellt werden. Üblicherweise betragen die Durchströmungsgeschwindigkeiten in solchen Filtern ca. 0,15 m/s.

Mit dieser Technik und den hierzu erforderlichen geringen Geschwindigkeiten kann in bestehenden Rauchgasreinigungsanlagen von fossil befeuerten Kraftwerken kein geeigneter Platz zur Adsorption gefunden werden, da die Rauchgasgeschwindigkeit in allen Teilen der Anlage um ein Vielfaches höher liegen. Die geringsten Rauchgasgeschwindigkeiten werden in der Regel im Staubabscheider (Elektrofilter) mit ca. 1,0 bis 2,0 m/s (Gasleerrohr-Geschwindigkeit) erreicht. Filterbasierte Adsorptionsabscheider müssen daher mit einer höheren Geschwindigkeit in diesem Bereich durchströmt werden können, um praktische Einsatzmöglichkeiten in kohlegefeuerten Kraftwerken zu erhalten.

Die technische Aufgabe der Erfindung war es daher eine Reinigungsvorrichtung zur Abscheidung von Schadstoffen, insbesondere Schwermetall und/oder Schwermetallverbindungen, insbesondere Quecksilber und/oder Quecksilberverbindungen, aus Verbrennungsgasen, insbesondere von Kohlekraftwerken bereitzustellen, sowie ein entsprechendes Verfahren, um die künftigen sehr geringen Grenzwerte für Schwermetall, insbesondere Quecksilber, und entsprechende chemische Verbindungen davon, für die Abgase von fossil befeuerten Kraftwerken einhalten zu können.

Um das vorliegende technische Problem zu lösen, strebten die Erfinder der vorliegenden Erfindung einen neuartigen Aufbau des Filterbettes an, um die Rückhaltung des Adsorbens im Wanderbett von der Durchströmungsgeschwindigkeit zu entkoppeln.

Die technische Aufgabe wird gelöst durch eine Reinigungsvorrichtung zur Abscheidung von Schadstoffen, insbesondere Schwermetall und/oder Schwermetallverbindungen, insbesondere Quecksilber und/oder Quecksilberverbindungen, aus Verbrennungsgasen, umfassend eine Filtereinrichtung enthaltend einen oder mehrere Wanderbettadsorber, wobei der Wanderbettadsorber eingerichtet ist, von oben nach unten von Adsorbens durchlaufen zu werden, und in Kreuzstromfahrweise von den Verbrennungsgasen durchströmt zu werden, wobei erfindungsgemäß der Wanderbettadsorber mindestens ein von Adsorbens durchlaufenes Filterbett aufweist, das anströmseitig und abströmseitig von Feingittern begrenzt ist.

Die erfindungsgemäße Vorrichtung kann in unterschiedlichen Anlagen eingesetzt werden, vorzugsweise in Kohlekraftwerken zur Reinigung der Verbrenungsgase derselben. Die Reinigungsvorrichtung dient insbesondere zur Abscheidung von Schadstoffen, bevorzugt ausgewählt aus der Gruppe bestehend aus SO₂, SO₃, HCl, HF, HBr, NOx; flüchtigen Metallen, Se, As und deren Verbindungen, vorzugsweise Schwermetall und/oder Schwermetallverbindungen, besonders bevorzugt von Quecksilber und/oder Quecksilberverbindungen, aus Verbrennungsgasen insbesondere von Müllverbrennungsanlagen und Kohlekraftwerken.

In einer bevorzugten Ausführungsform weist die die Filtereinrichtung bzw. der Wanderbettadsorber entlang der Strömungsrichtung des Verbrennungsgases (d.h. entlang der Filtertiefe) lediglich nur ein Filterbett auf, das durch geeignete Feingitter anströmseitig und abströmseitig begrenzt ist. Das Feingitter wird dabei so fein gewählt, dass ein übermäßiges Austreten des Adsorbens verhindert wird. Wie weiter unten näher ausgeführt weisen die Feingitter vorzugsweise außen auf die Feingitter aufgebrachte Stützstrukturen, insbesondere Stützgitter und Verstrebungen auf. Ein- bzw. Austrittsjalousien sind bei dem erfindungsgemäßen Wanderbettadsorber nicht notwendig und daher vorzugsweise nicht angeordnet.

Die Feingitter, die das Filterbett anströmseitig und abströmseitig begrenzen, erstrecken sich vorzugsweise über den gesamten durchlässigen Teil des Filterbettes bzw. über den gesamten Querschnitt des Verbrennungsgasstroms durch die Filtereinrichtung.

Bei dem erfindungsgemäßen Wanderbettadsorber wird Adsorbens entlang der Schwerkraft (d.h. in senkrechter Richtung) durch das ebenfalls senkrecht ausgerichtete Filterbett befördert, während die Verbrennungsgase quer zu dieser Richtung das Filterbett durchströmen (Kreuzstrom).

In einer bevorzugten Ausführungsform weist die Filtereinrichtung mehrere nebeneinander angeordnete Wanderbettadsorber auf. Gemäß dieser bevorzugten Ausführungsform werden mehrere parallel geschaltete Wanderbettadsorber über den ganzen Querschnitt des Verbrennungsgasstroms nebeneinander angeordnet. Auf diese Weise wird zum einen die Filterstruktur stabilisiert. Zudem liegen hier mehrere nebeneinander liegende aber voneinander getrennt arbeitende Filterbetten vor, die von Adsorbens durchlaufen werden, was die Gefahr des Verstopfens der Filterbetten verringert und die Möglichkeit bietet je nach Beaufschlagung durch den Verbrennungsgasstrom unterschiedliche Transportgeschwindigkeiten des Adsorbens zu verwirklichen. In Abhängigkeit des Gasstroms kann das Filterbett in verschiedenen Teilen des Gesamtfilters unterschiedlich schnell abgezogen werden, beispielsweise und bevorzugt bei zu hoher Staubfracht oder auch bei zu hohem Quecksilbergehalt.

In einer weiteren bevorzugten Ausführungsform sind die nebeneinander angeordneten Wanderbettadsorber angewinkelt zueinander ausgerichtet. Mit dieser Maßnahme wird die Filterfläche vergrößert und die Durchströmungsgeschwindigkeit und damit der Druckverlust minimiert. So kann die Gasgeschwindigkeit in der Filtereinrichtung optimal auf die anlagenspezifischen Anforderungen angepasst werden.

Weiterhin ist bevorzugt, dass die Feingitter, die das von Adsorbens durchlaufene Filterbett des Wanderbettadsorbers begrenzen, eine Maschenweite von 1,0 mm bis 8,0 mm, bevorzugt von 2,0 mm bis 4,0 mm aufweisen.

In einer weiteren bevorzugten Ausführungsform werden die Feingitter durch eine außen auf den Feingittern aufliegende Stützstruktur gestützt. Insbesondere, werden die Feingitter bevorzugt durch außen auf den Feingittern aufliegende Stützgitter mit einer Maschenweite von 2,0 cm bis 50,0 cm, vorzugsweise von 2,0 cm bis 20,0 cm, weiter bevorzugt von 2,0 cm bis 5,0 cm gestützt.

In einer weiteren ganz besonders bevorzugten Ausführungsform beträgt die aktive Filtertiefe, d.h. die Gesamtdicke des vom Adsorbens durchlaufenen Filterbettes des Wanderbettadsorbers in Strömungsrichtung des Verbrennungsgasstroms 20 mm bis 200 mm, weiter bevorzugt 20 mm bis 100 mm und besonders bevorzugt 30 mm bis 70 mm.

Weiterhin ist bevorzugt, dass die Filtereinrichtung enthaltend über den ganzen Verbrennungsgasquerschnitt ggf. mehrere Wanderbettadsorber, eine Höhe von 3,0 m bis 20,0 m und eine Breite von 3,0 m bis 30,0 m aufweist. In der Ausführungsform, bei der die Filtereinrichtung aus mehreren parallel geschalteten und nebeneinander angeordneten Wanderbettadsorbern besteht, die vorzugsweise angewinkelt zueinander stehen können, beträgt die Breite eines einzelnen Wanderbettadsorbers oder die Breite eines Wanderbettadsorbersegments vorzugsweise 0,5 m bis 3,5 m, besonders bevorzugt 1,5 m bis 3,0 m.

In vorteilhafter und bevorzugter Weise werden die Feingitter und, soweit vorhanden, die außen anliegende Stützstruktur randseitig von einem Rahmen, insbesondere bevorzugt von U-Profilen gehalten.

Weiterhin ist bevorzugt, dass die Filtereinrichtung enthaltend einen oder mehrere Wanderbettadsorber hängend angebracht ist. Diese Konstruktionsweise erlaubt die Ausführung des Adsorbers mit einer geringen Filtertiefe des Adsorbers und dünnwandigen Begrenzungen des Wanderbettes, nämlich den Feingittern.

Die erfindungsgemäße Reinigungsvorrichtung und damit die Filtereinrichtung wird bezogen auf die Strömungsrichtung des Verbrennungsgasstroms vorzugsweise nach der Staubabscheidung und vor der Nassreinigungsanlage (Nassentschwefelungsanlage) angeordnet. Weiterhin wird die erfindungsgemäße Reinigungsvorrichtung und damit die Filtereinrichtung vorzugsweise in einem Elektrofilter oder in einem Gewebefilter des entsprechenden Kraftwerks angeordnet, vorzugsweise in einem Elektrofilter. Der Elektrofilter bzw. Gewebefilter dient zur Entfernung von Staub aus den Verbrennungsgasen und weist ein Gehäuse mit mindestens einem Eintritt und mindestens einem Austritt für Verbrennungsgas auf. Dabei ist mindestens ein Elektrofilterfeld zwischen dem Eintritt und dem Austritt für Verbrennungsgas angeordnet. Die erfindungsgemäße Filtereinrichtung wird bezogen auf den Verbrennungsgasstrom vorzugsweise stromabwärts des letzten Elektrofilterfeldes und vor dem Austritt im Elektrofilter so angeordnet, dass das Verbrennungsgas in Kreuzstromfahrweise durch die Filtereinrichtung geleitet wird.

Die vorliegende Erfindung stellt auch einen Elektrofilter bereit zur Entfernung von Staub aus Verbrennungsgasen, umfassend ein Gehäuse mit mindestens einem Eintritt und mindestens einem Austritt für Verbrennungsgas, wobei mindestens ein Elektrofilterfeld zwischen Eintritt und Austritt für Verbrennungsgas angeordnet ist, wobei erfindungsgemäß die oben ausgeführte Filtereinrichtung bezogen auf den Verbrennungsgasstrom stromabwärts des letzten Elektrofilterfeldes und vor dem Austritt im Elektrofilter so angeordnet ist, dass das Verbrennungsgas in Kreuzstromfahrweise durch die Filtereinrichtung geleitet wird.

Die vorliegende Erfindung stellt auch eine Reinigungsanlage bereit zur Reinigung von Verbrennungsgasen zur Abscheidung von Schadstoffen, insbesondere Schwermetall und/oder Schwermetallverbindungen, insbesondere Quecksilber und/oder Quecksilberverbindungen, aus Verbrennungsgasen, umfassend einen einem Verbrennungskessel nachgeordneten Reaktor mit einer Filtereinrichtung enthaltend einen oder mehrere Wanderbettadsorber, wobei der Wanderbettadsorber eingerichtet ist, von oben nach unten von Adsorbens durchlaufen zu werden, und in Kreuzstromfahrweise von den Verbrennungsgasen durchströmt zu werden, wobei erfindungsgemäß der Wanderbettadsorber mindestens ein von Adsorbens durchlaufenes Filterbett aufweist, das anströmseitig und abströmseitig von Feingittern begrenzt ist. Vorzugsweise wird der Wanderbettadsorber bezogen auf die Strömungsrichtung des Verbrennungsgasstroms nach der Staubabscheidung und vor der Nassreinigungsanlage (Nassentschwefelungsanlage) angeordnet. Weiterhin wird der Wanderbettadsorber vorzugsweise in einem Elektrofilter oder in einem Gewebefilter angeordnet, vorzugsweise in einem Elektrofilter, nach dem letzten Elektrofilterfeld und vor dem Austritt aus dem Elektrofilter. Wird der Wanderbettadsorber mit einem Gewebefilter kombiniert, wird dieser in der Regel einem eigenen Reaktor angeordnet werden müssen. Ganz besonders bevorzugt wird für den Wanderbettadsorber kein eigener Reaktor oder Rektorgehäuse benötigt, da der Wanderbettadsorber vorzugsweise in bestehenden Reaktoren wie dem Elektrofilter angeordnet wird.

Die vorliegende Erfindung stellt auch ein Verfahren zur Abscheidung von Schadstoffen, bevorzugt ausgewählt aus der Gruppe bestehend aus SO₂, SO₃, HCl, HF, HBr, NOx; flüchtigen Metallen, Se, As und deren Verbindungen, vorzugsweise Schwermetall und/oder Schwermetallverbindungen, besonders bevorzugt von Quecksilber und/oder Quecksilberverbindungen, aus Verbrennungsgasen bereit unter Verwendung der erfindungsgemäßen Reinigungsvorrichtung oder des Elektrofilters oder der Reinigungsanlage, wobei die Verbrennungsgase in Kreuzstromfahrweise durch den von oben nach unten von Adsorbens durchlaufenen Wanderbettadsorber strömen und mindestens ein Teil der Schadstoffe, insbesondere mindestens ein Teil des Schwermetalls und/oder der Schwermetallverbindungen, insbesondere mindestens ein Teil des Quecksilbers und/oder der Quecksilberverbindungen aus dem Verbrennungsgas von dem Adsorbens aufgenommen wird.

In einem bevorzugten Verfahren wird im Verbrennungsgasstrom enthaltenes elementares Quecksilber (Hg⁰) von dem Adsorbens adsorbiert und mindestens teilweise zu Hg²⁺ oxidiert.

In einem bevorzugten Verfahren wird Adsorbens eingesetzt, das eine durchschnittliche Partikelgröße von 1,5 mm bis 15,0 mm, vorzugsweise von 2,0 mm bis 8,0 mm aufweist.

In einem weiteren besonders bevorzugten Verfahren wird Adsorbens eingesetzt, das ausgewählt ist aus der Gruppe bestehend aus inertem Trägermaterial mit aktiver Beschichtung, auf Kohlenstoff basierte Partikel, insbesondere Aktivkohle, Zeolithen, Kalkprodukten, Ionenaustauscherharzen und Mischungen davon. Insbesondere ist die Verwendung von Adsorbentien (vorzugsweise Aktivkohle und Aktivkoks) bevorzugt, die mit Schwefel und/oder Schwefelsäure und/oder Halogeniden imprägniert bzw. dotiert sind. Auf diese Weise kann elementares Schwermetall bzw. Quecksilber oxidiert werden.

In einem weiteren besonders bevorzugten Verfahren betragen die Verweilzeiten des Adsorbens im Wanderbett 10,0 h bis 200,0 h, vorzugsweise 10,0 h bis 100,0 h und besonders bevorzugt 12,0 h bis 24,0 h. Die Rieselgeschwindigkeit des Adsorbens im Filterbett beträgt vorzugsweise 0,1 m/h bis 5,0 m/h.

In dem Verfahren erfolgt die Beschickung des Materials (Adsorbens), welches vorzugsweise allein durch die Schwerkraft durch das Filterbett (Hohlraum des Wanderbettadsorbers) fließt, von der Oberseite des Filterbettes z.B. durch einen Rohrkettenförderer. Der Abzug des mit Schadstoffen beladenen Materials (Adsorbens) erfolgt an der Unterseite des Wanderbettes.

In einem weiteren bevorzugten Verfahren wird die Reinigungsvorrichtung und damit das Adsorbens einer Temperatur des Verbrennungsgases von 300°C oder geringer, vorzugsweise im Bereich von 50°C bis 250°C ausgesetzt.

In einem weiteren besonders bevorzugten Verfahren beträgt die Geschwindigkeit des Verbrennungsgases durch den Wanderbettadsorber 1,0 bis 2,0 m/s (Gasleerrohr-Geschwindigkeit).

### Detaillierte Beschreibung der Erfindung

Wie oben erläutert, stellt die vorliegende Erfindung eine Reinigungsvorrichtung zur Abscheidung von Schwermetall und/oder Schwermetallverbindungen, insbesondere Quecksilber und/oder Quecksilberverbindungen, aus Verbrennungsgasen insbesondere von Kohlekraftwerken bereit. Die Reinigungsvorrichtung umfasst eine Filtereinrichtung enthaltend einen oder mehrere Wanderbettadsorber, wobei der Wanderbettadsorber eingerichtet ist, von oben nach unten von Adsorbens durchlaufen zu werden, und in Kreuzstromfahrweise von den Verbrennungsgasen durchströmt zu werden, wobei erfindungsgemäß der Wanderbettadsorber mindestens ein von Adsorbens durchlaufenes Filterbett aufweist, das anströmseitig und abströmseitig von Feingittern begrenzt ist.

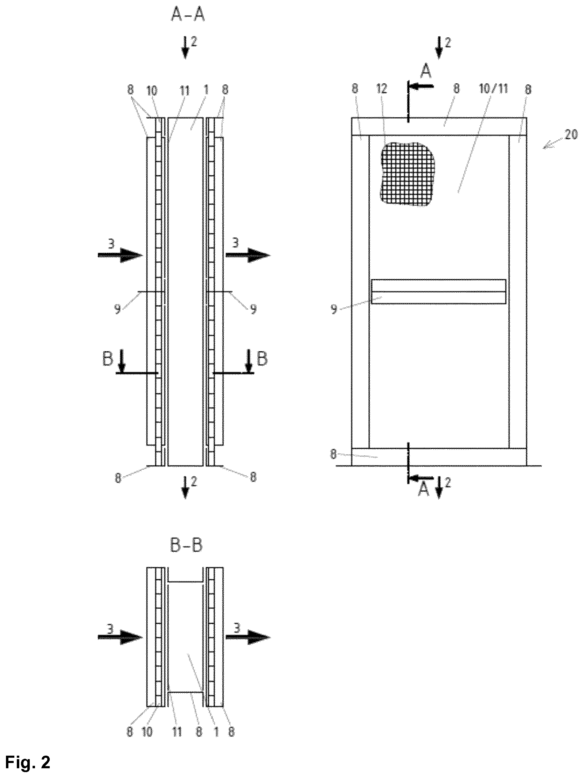

Die erfindungsgemäße Reinigungsvorrichtung erlaubt es durch ihren neuartigen Aufbau des Filterbettes, die Rückhaltung des Adsorbens von der Durchströmungsgeschwindigkeit zu entkoppeln. Der schematische Aufbau dieses neuen Filterbettes ist in Figur 2 dargestellt. Der Filter bzw. die Filtereinrichtung besteht nur noch aus einem Bereich (Filterbett), der durch ein geeignetes Feingitter begrenzt ist. Das Feingitter wird dabei so fein gewählt, dass ein (übermäßiges) Austreten des Adsorbens verhindert wird. Aufgrund der Feinheit des Feingitters oder Siebes wird das Filterbett von einer primären und sekundären Stützstruktur umgeben. Somit grenzt der Filter das aktive Medium (Adsorbens) zum Abgas hin durch folgenden Aufbau ab: Sekundäre Stützstruktur - Stützgitter (primäre Stützstruktur) - Feingitter (Siebblech) - aktives Filtermedium (Adsorbens) - Feingitter (Siebblech) - Stützgitter (primäre Stützstruktur) - Sekundäre Stützstruktur.

Die Reinigungsvorrichtung, und damit die Filtereinrichtung enthaltend über den ganzen Verbrennungsgasquerschnitt ggf. mehrere Wanderbettadsorber, weist in der Regel eine Höhe von 3,0 m bis 20,0 m und eine Breite von 3,0 m bis 30,0 m auf. Die Filtereinrichtung kann vorzugsweise aus mehreren parallel geschalteten und nebeneinander angeordneten Wanderbettadsorbern bestehen, die vorzugsweise angewinkelt zueinander stehen können. Dabei liegt die Breite eines einzelnen Wanderbettadsorbers oder Segments des Wanderbettadsorbers von 0,5 m bis 3,5 m, besonders bevorzugt von 1,5 m bis 3,0 m. Die einzelnen Filterelemente können über ein Schienensystem an Ihren Platz, insbesondere am Ende des Elektrofilters eingebracht werden.

Die aktive Filtertiefe kann vorteilhafterweise im Vergleich zu den herkömmlichen Filtern relativ gering ausgeführt werden, vorzugsweise 20 mm bis 200 mm, bevorzugt 20 mm bis 100 mm, weiter bevorzugt 30 mm bis 70 mm, noch weiter bevorzugt, insbesondere bevorzugt 40 mm bis 60 mm und ganz besonders bevorzugt um 50 mm.

Mit der erfindungsgemäßen Technik kann nun in bestehenden Rauchgasreinigungsanlagen von fossil befeuerten Kraftwerken ein geeigneter Platz zur Adsorption gefunden werden. Die Reinigungsvorrichtung gemäß der vorliegenden Erfindung eignet sich besonders bei den in Kohlekraftwerken üblichen Rauchgasgeschwindigkeiten, die bezogen auf die Geschwindigkeit in einem vorhandenen Filterbett (z.B. Wanderbettadsorber) im Vergleich zu Müllverbrennungsanlagen um ein Vielfaches höher liegen. Ein besonders geeigneter Einsatzort der Filtereinrichtung gemäß der vorliegenden Erfindung ist im Staubabscheider, vorzugsweise ein Elektrofilter, mit Rauchgasgeschwindigkeiten von ca. 1,0 bis 2,0 m/s (Gasleerrohr-Geschwindigkeit). Dabei wird die erfindungsgemäße Reinigungsvorrichtung und damit die Filtereinrichtung bezogen auf die Strömungsrichtung des Verbrennungsgasstroms vorzugsweise nach der Staubabscheidung und vor Nassreinigungsanlage (Nassentschwefelungsanlage) angeordnet.

Um Staubversottungen vorzubeugen und eine möglichst hohe Verweilzeit des Materials zu gewährleisten, ist es besonders vorteilhaft die erfindungsgemäße Reinigungsvorrichtung hinter dem Staubfilter (Elektrofilter) jedoch noch im Elektrofiltergehäuse anzuordnen.

Hinsichtlich der Temperatur erfolgt der Einsatzbereich dieser erfindungsgemäßen Technologie im Bereich von bevorzugt 300°C oder weniger. Tiefere Temperaturen begünstigen die adsorptive Hg-Abscheidung, während höhere Temperaturen prinzipiell die katalytische Oxidationsgeschwindigkeit begünstigen. Ein Betrieb hinter der Rauchgasentschwefelung bis zu Umgebungstemperaturen ist somit ebenso möglich, sofern der Wassertaupunkt des Abgases nicht unterschritten wird. Ein Abstand zum Taupunkt von 20°C oder höher sollte gegeben sein, um eine Kapillarkondensation zu verhindern.

An der Position nach dem Staubfilter kann der oberflächenkatalytische Effekt der Hg-Oxidation genutzt werden und nicht adsorbiertes aber oxidiertes Quecksilber (wegen der deutlich besseren Wasserlöslichkeit) in der nachgeschalteten Rauchgasentschwefelungsanlage (REA) eingebunden werden.

Neben der Hg-Oxidation bzw. Adsorption können je nach eingesetztem Adsorptionsmaterial auch andere vorwiegend saure Abgasbestandteile (z.B. SO₂, SO₃, HCl, HF, HBr), flüchtige Metalle, Se, As und deren Verbindungen oder NOx abgeschieden werden.

Die Verweilzeit des Adsorbens in der Filtereinrichtung wird unter anderem durch die Schadstoffbelastung und Staubgehalte im Abgas bestimmt. Durch Variation der Verweilzeit kann eine Steuerung zwischen Adsorption und Oxidation gezielt beeinflusst werden. Eine Rückführung des Adsorbensmaterials und Rückführung in das System zur erneuten Verwendung ist nach grober mechanischer Abreinigung des Staubes möglich. Bei Bedarf (zur Einstellung bestimmter Eigenschaften) kann auch vor der Wiederverwendung eine (teilweise) Aufbereitung des Adsorbens erfolgen.

Eine thermische Desorption des Quecksilbers vom Adsorbens ist in einer externen Anlage ebenso realisierbar, sodass das Adsorbens in mehreren Zyklen entsprechend der mechanischen Beständigkeit genutzt werden kann.

Neben der Hg-Abscheidung erfolgen über das Filterbett des erfindungsgemäßen Wanderbettadsorbers zudem eine Staubabscheidung und eine Staubfreisetzung. In Abhängigkeit dieser beiden Größen kann daher über den Filter auch eine Staubminderung erreicht werden. Freigesetzte Staubpartikel werden zu großen Teilen in der REA wieder abgeschieden, sodass diese keinen negativen Effekt auf die Reingasqualität am Schornstein haben.

Neben der Abscheidung von Quecksilber aus dem Verbrennungsgas mittels der Adsorption von Quecksilber an Aktivkohle ist die Quecksilberoxidation durch Einsatz von Katalysatoren und damit eine Umwandlung von elementarem Hg⁰ zu oxidiertem Hg²⁺ eine wichtige Maßnahme für das Verfahren gemäß der vorliegenden Erfindung.

Die Adsorption von Quecksilber kann durch physikalische Adsorption (Physisorption) oder chemische Adsorption (Chemisorption) erfolgen. Physikalische Adsorption bezeichnet die Anlagerung von Fremdmolekülen aus einem Fluid an einem porösen Adsorbens mit geeigneter Oberflächenstruktur durch freie Valenzen bzw. Oberflächenkräfte (van der Waals'sche Kraft).

Bei der chemischen Adsorption wird das Adsorbtiv durch stärkere chemische Bindungen an das Adsorbens gebunden, d.h. die Bindungsstruktur ändert sich signifikant. Adsorbentien können aufgrund ihrer Zusammensetzung in Kohlenstoff-, oxidische und polymere Adsorbentien aufgeteilt werden. Kohlenstoffhaltige Adsorbentien, wie z.B. Aktivkohlen und Kokse, werden bevorzugt in der Rauchgasreinigung von Kraftwerksanlagen und in dem vorliegenden erfindungsgemäßen Verfahren eingesetzt.

Kohlenstoffhaltige Adsorbentien wirken in Verbrennungsgasströmen als Katalysator, so dass eine teilweise Oxidation von elementarem Quecksilber stattfindet, wenn geeignete Reaktionspartner vorhanden sind.

Bei Physisorption von Quecksilber ist das Adsorptionsgleichgewicht bereits bei sehr geringen Beladungen erreicht, so dass
- die Wirksamkeit der physikalischen Adsorption von Hg an Aktivkohle beschränkt ist
- Beladungen sehr instabil vorliegen und Desorption sehr leicht stattfindet,
- die Abscheidung höherer und schwankender Konzentrationen sehr schwierig ist und zu sehr hohen Verbräuchen führt.

Die Chemisorption weist stärkere Bindungen auf und Rückreaktionen (Desorption) werden verhindert. Zur Erhöhung des Anteils an Chemisorption werden Kohlen mit geeigneten Reaktionspartnern imprägniert. Zur Erhöhung der Abscheidung von Quecksilber wird vorzugsweise Aktivkohle bzw. Aktivkoks verwendet, die bzw. der durch eine Imprägnierung, insbesondere mit Schwefel und/oder Schwefelsäure und/oder Halogeniden vorbehandelt wurde. Die Wirksamkeit der Imprägnierung mit Schwefelsäure ist gegenüber einer Imprägnierung mit Schwefel höher, da die sowohl die imprägnierte Oberfläche (auch Porenvolumen) als auch die Reaktionskinetik höher ist. Je nach Verweilzeit des Adsorbens und Quecksilberkonzentration im Verbrennungsgas können Aktivkoksbeladungen von bis zu 5 Gew.-% Quecksilber erreicht werden.

Wie oben bereits erläutert, liegt Quecksilber im Verbrennungsgas nach dem Kessel als elementares Quecksilber Hg⁰ oder als einwertiges und zweiwertiges Quecksilber in der Oxidationsstufe Hg¹⁺ und Hg²⁺ vor. Die Abscheideeffizienz der Rauchgasreinigungsstufen für Quecksilber wird maßgeblich durch das Verhältnis der Quecksilberspezies bestimmt. Die Brennstoffqualität und somit die Zusammensetzung des Verbrennungsgases im Feuerraum sowie auch die Abkühlgeschwindigkeit haben einen entscheidenden Einfluss auf die Bildung der Quecksilberspezies. Diese Faktoren sind aber nur bedingt beeinflussbar. Quecksilber kommt auf Grund der Höhe der Verbrennungstemperatur im Feuerraum zunächst nur als das wasserunlösliche metallische Quecksilber Hg⁰ vor. Erst mit der Abkühlung der Verbrennungsgase z.B. durch die Heizflächen entsteht bei Vorhandensein von Liganden oxidiertes Quecksilber. Nur zweiwertiges Quecksilber lässt sich auf Grund der guten Wasserlöslichkeit in den nachgeschalteten Nasswäscher der REA zu einem hohen Prozentsatz durch Absorption abscheiden, einwertiges und elementares Quecksilber hingegen werden in dem üblicherweise nachgeschalteten Nasswäscher nicht abgeschieden und über das Abgas des Kraftwerkes in die Umwelt emittiert. Bei chloridarmen und schwefelreichen Brennstoffen verbleibt ein wesentlicher Teil des Quecksilbers in der elementaren Form.

Da Quecksilber in Verbrennungsgasen insbesondere von Kohlekraftwerken zu einem erheblichen Anteil in der elementaren Form vorliegt, ist die Oxidation des Quecksilbers in der Gasphase eine wesentliche Maßnahme zur Verbesserung der Abscheidung. Die Anwesenheit von Halogeniden begünstigt die Oxidation, das Vorkommen von Schwefeloxiden im Verbrennungsgas hemmt diese.

Bei dem erfindungsgemäß angewandten im Kreuzstrom von Verbrennungsgasen durchströmten Wanderbettadsorber wird das mit dem Adsorptiv gesättigte Adsorbens kontinuierlich bzw. quasi-kontinuierlich aus dem Reaktor ausgetragen und die entsprechende Adsorbensmenge durch Nachspeisung ersetzt. Wie bereits erwähnt, durchströmt das zu reinigende Verbrennungsgas das Adsorberbett im Kreuzstrom. Als Adsorbens kommen im Regelfall körnige Produkte und Granulate statt der pulverförmigen Produkte gegenüber dem Flugstromverfahren zum Einsatz.

Im Kreuzstrom durchströmte Wanderbettadsorber weisen im Gegensatz zu Festbettadsorbern keine über die Betttiefe konstante Adsorptionszone auf, sondern die Sättigungskonzentration des Adsorbens steigt von oben nach unten kontinuierlich an und erreicht ihr Maximum am Boden des Verbrennungsgaskanals. Die Geschwindigkeit des Wanderbettes wird in Abhängigkeit der aktiven Filtertiefe bzw. Betttiefe so gewählt, dass die Wanderungsgeschwindigkeit der Adsorptionszone zu keinem Durchbruch führt.

Die Erfindung wird anhand der folgenden Figuren näher beschrieben.
**Figur 1** zeigt einen herkömmlichen Wanderbettadsorber im Querschnitt.
**Figur 2** zeigt einen Wanderbettadsorber gemäß der Erfindung.
**Figur 3** zeigt eine schematische Darstellung eines Elektrofilters in einer seitlichen Querschnittsansicht enthaltend den erfindungsgemäßen Wanderbettadsorber anstellte des letzten Elektrofilterfeldes im Elektrofilter.
**Figur 4** zeigt eine schematische Darstellung eines Elektrofilters in einer seitlichen Querschnittsansicht enthaltend als letzte Stufe den erfindungsgemäßen Wanderbettadsorber.
**Figur 5** zeigt eine schematische Darstellung eines Elektrofilters im Querschnitt von oben gesehen, wobei mehrere Wanderbettadsorber nebeneinander in einem Winkel zueinander angeordnet sind.

**Figur 1** zeigt einen herkömmlichen Wanderbettadsorber 13 im Querschnitt. Der Filter wird im Kreuzstrom durchströmt, d.h. der Verbrennungsgasstrom 3 verläuft etwa im rechten Winkel zur Transportrichtung des Adsorbens 2. Der gezeigte Wanderbettadsorber 13 besteht aus vier Bereichen. Das Verbrennungsgas 3 tritt über die Eintrittsjalousien 4 in den ersten Bereich 14, in dem nur sehr wenig Adsorbens 2 vorhanden ist, und gelangt von dort in den zweiten Bereich 15 und dritten Bereich 16. Dort - im zweiten und dritten Bereich 15, 16 des Filters - wird der Hauptteil des Adsorbens 2 gehalten. Diese beiden Bereiche 15, 16 stellen den eigentlichen Filter dar. Schließlich gelangt der Verbrennungsgasstrom 3 in den vierten Bereich 17 und verlässt über die Austrittsjalousien 7 die Filtervorrichtung 13. Durch verschieden schnelle Durchflussraten des Adsorbens 2 im zweiten und dritten Bereich 14, 15 wird die Abscheideeffizienz bzw. der Abscheideort bestimmt. Durch die Quadratlochbleche 5 werden 90 bis 99,9 % des Adsorbens 2 in diesem Bereich gehalten. Austretendes Adsorbens 2 wird in den äußeren beiden Bereichen gesammelt, hier dem ersten und dem vierten Bereich 14, 17. Die Trennung zwischen Adsorbens 2 und Verbrennungsgas 3 erfolgt in erster Line schwerkraftbedingt, da an den Austrittsjalousien 7 das Verbrennungsgas 3 austreten kann und die schwereren Adsorbenspartikel in den vierten Bereich 17 "zurückrollen". Dieses "Zurückrollen" kann nur bei sehr geringen Durchströmungsgeschwindigkeiten sichergestellt werden. Üblicher Weise betragen die Durchströmungsgeschwindigkeiten in solchen Filtern ca. 0,15 m/s.

**Figur 2** zeigt einen erfindungsgemäßen Wanderbettadsorber 20. Die rechte Ansicht stellt eine Draufsicht des erfindungsgemäßen Filters 20 dar. Die linke obere Ansicht ist eine seitliche Querschnittsansicht entlang der Linie A-A der Draufsicht und die linke untere Ansicht ist eine Querschnittsansicht entlang der Linie B-B von oben. Die erfindungsgemäße Filtereinrichtung bzw. Wanderbettadsorber 20 weist lediglich einen Bereich 1 auf, der von Adsorbens 2 durchlaufen wird: das Filterbett 1. Das Filterbett 1 wird durch geeignete Feingitter 11 begrenzt, bzw. wird von diesen anströmseitig und abströmseitig von den Kammern getrennt, die von Verbrennungsgas 3 durchströmt werden. Das Feingitter 11 wird dabei so fein gewählt, dass ein (übermäßiges) Austreten des Adsorbens 2 verhindert wird. Aufgrund der Feinheit des Feingitters 11 wird das Filterbett 1 von einer primären 10 und sekundären Stützstruktur 9 umgeben. Somit grenzt der Filter das aktive Medium (Adsorbens 2) zum Verbrennungsgas bzw. Abgas 3 hin durch folgenden Aufbau ab.
Sekundäre Stützstruktur 9 - Stützgitter 10 (primäre Stützstruktur) - Feingitter 11 (Siebblech) - aktives Filtermedium 2 (Adsorbens) - Feingitter 11 (Siebblech) - Stützgitter 10 (primäre Stützstruktur) - Sekundäre Stützstruktur 9.

Im Detail weist die Filtereinrichtung einen Wanderbettadsorber 20 auf, der von oben nach unten von Adsorbens 2 durchlaufen wird. Der Wanderbettadsorber 20 und damit das Adsorbens 2 wird in Kreuzstromfahrweise von den Verbrennungsgasen 3 durchströmt. Das Filterbett 1, des Wanderbettadsorbers, wird von Feingittern 11 begrenzt. Die Maschenweite der Feingitter 11 betragen in der Regel von 2,0 mm bis 8,0 mm (mit der Kennziffer 12 dargestellt: in Figur 2 mit vergrößerter Darstellung).

Der dargestellte Wanderbettadsorber 20 weist eine außen auf den Feingittern 11 aufliegende Stützstruktur 10, 9 auf, die die Feingitter 11 stützt. Diese Stützstruktur ist in der gezeigten Ausführungsform als Stützgitter 10 und zusätzlichen Verstärkungsstreben 9 ausgeführt. Die Verstärkung 9 weist in der Regel horizontal und oder diagonal verlaufende Verstrebungen auf. Die in der Figur dargestellten Stützgitter 10 liegen außen auf den Feingittern 11 auf und stützen diese so. Die Stützgitter 10 weisen vorzugsweise eine Maschenweite von 2,0 cm bis 5,0 cm auf, können aber auch eine größere Maschenweite besitzen, beispielsweise von 2,0 cm bis 50,0 cm.

Die aktive Filtertiefe, das heißt das mit Adsorbens 2 gefüllte Filterbett 1, kann im Vergleich zu den herkömmlichen Filtern geringer ausgeführt werden, und beträgt vorzugsweise etwa 50 mm.

Die Feingitter 11 und die außen anliegende Stützstruktur 10, 9 werden randseitig von einem Rahmen 8 gehalten, insbesondere durch U-Profile realisiert, und über diese in der Anlage befestigt.

Die Reinigungsvorrichtung enthaltend über den ganzen Verbrennungsgasquerschnitt ggf. mehrere Wanderbettadsorber weist eine Höhe von 3,0 m bis 20,0 m und eine Breite von 3,0 m bis 30,0 m auf.

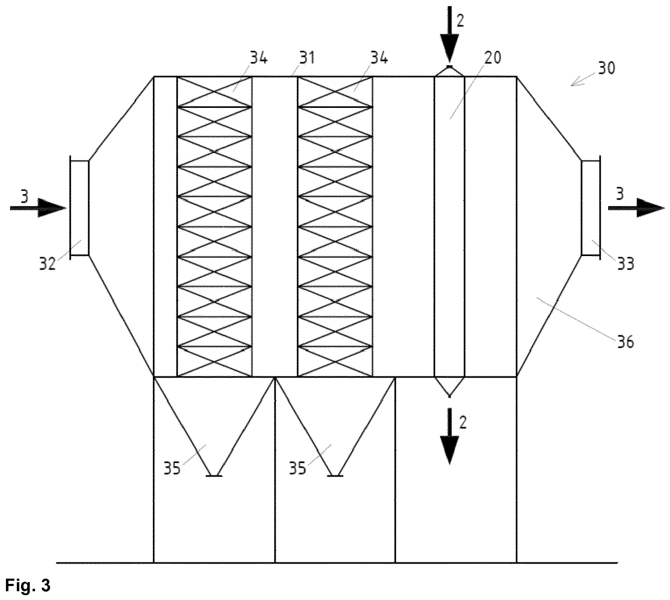

**Figur 3** zeigt eine schematische Darstellung eines Elektrofilters 30 in einer seitlichen Querschnittsansicht enthaltend den erfindungsgemäßen von Adsorbens 2 von oben nach unten durchlaufenen Wanderbettadsorber 20. Die erfindungsgemäße Reinigungsvorrichtung bzw. Filtereinrichtung 20 wird vorzugsweise in einem Elektrofilter 30 der Kraftwerke angeordnet. Der Elektrofilter 30 weist ein Gehäuse 31 mit mindestens einem Eintritt 32 und mindestens einem Austritt 33 für Verbrennungsgas 3 auf. Dabei ist mindestens ein Elektrofilterfeld 34 zwischen dem Eintritt 32 und dem Austritt 33 für Verbrennungsgas 3 angeordnet. Die Figur 3 stellt die Anordnung der erfindungsgemäßen Filtereinrichtung anstellte des letzten Elektrofilterfeldes im Elektrofilter 30 dar. Der Wanderbettadsorber 20 erstreckt sich über den ganzen Querschnitt des Verbrennungsgasstroms 3 im Elektrofilter 30. Mit 35 sind die Trichter für den Filterstaubabzug bezeichnet.

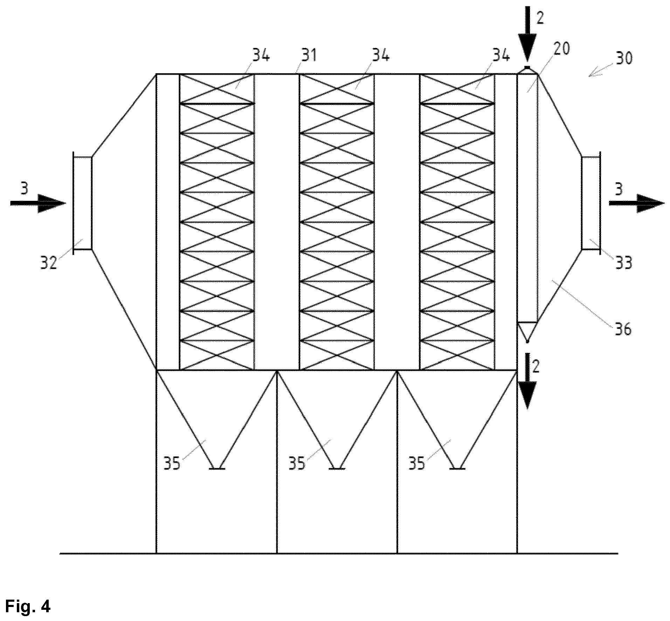

**Figur 4** zeigt eine schematische Darstellung eines Elektrofilters 30 in einer seitlichen Querschnittsansicht enthaltend als letzte Stufe den erfindungsgemäßen von Adsorbens 2 von oben nach unten durchlaufenen Wanderbettadsorber 20. Wie auch der in Figur 3 beschriebene Elektrofilter weist der gezeigte Elektrofilter 30 ein Gehäuse 31 mit mindestens einem Eintritt 32 und mindestens einem Austritt 33 für Verbrennungsgas 3 auf. Dabei ist mindestens ein Elektrofilterfeld 34 zwischen dem Eintritt 32 und dem Austritt 33 für Verbrennungsgas 3 angeordnet. Die Figur 3 zeigt die Anordnung der erfindungsgemäßen Filtereinrichtung 20 stromabwärts des letzten Elektrofilterfeldes 34 im Elektrofilter 30 unmittelbar vor dem Austritt 33 für das Verbrennungsgas 3 aus dem Elektrofilter. In dieser Ausführungsform ist der Wanderbettadsorber an der Stelle des Elektrofilters angeordnet, an der der Querschnitt beginnt, sich entlang der Austrittshaube 36 zum Austritt 33 hin zu verjüngen. Mit 35 sind die Trichter für den Filterstaubabzug bezeichnet.

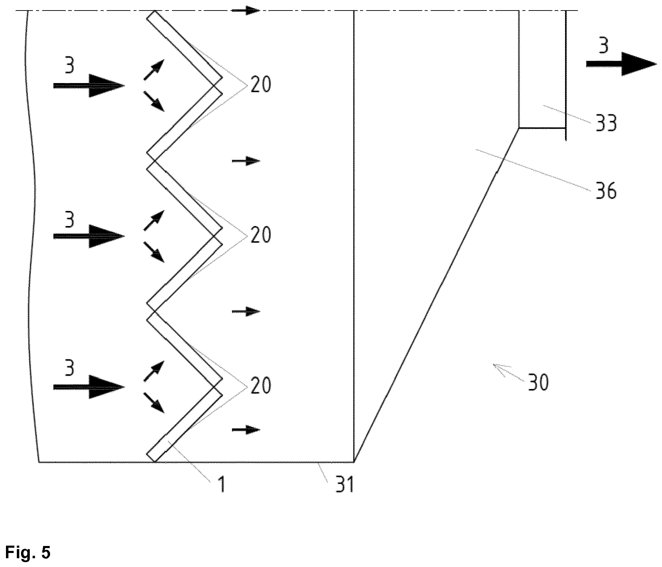

**Figur 5** zeigt eine schematische Darstellung eines Elektrofilters 30 im Querschnitt von oben gesehen. In dem Elektrofilter 30 ist der erfindungsgemäße Wanderbettadsorber 20 in der Nähe des Austritts 33 für das Verbrennungsgas 3 und zwar vor Beginn der Verjüngung zum Austritt 33 hin angeordnet, an der Stelle, an der die Austrittshaube 36 beginnt. Die in der Figur 5 gezeigte Ausführungsform des Elektrofilters 30 weist eine Filtereinrichtung 20 auf, die aus mehreren nebeneinander angeordneten Wanderbettadsorbern 20 besteht. In der gezeigten Ausführungsform werden mehrere parallel geschaltete Wanderbettadsorber 20 über den ganzen Querschnitt des Verbrennungsgasstroms nebeneinander in einem Winkel zueinander angeordnet. Auf diese Weise wird die Filterfläche vergrößert und die Durchströmungsgeschwindigkeit und damit der Druckverlust minimiert.

Die Breite eines einzelnen Wanderbettadsorbers 20 oder die Breite eines Wanderbettadsorbersegments 20 beträgt ca. 0,5 m bis 3,5 m, insbesondere 1,5 m bis 3,0 m.

### Bezugszeichenliste

- 1: Filterbett
- 2: Adsorbens (Feststoff)
- 3: Verbrennungsgas
- 4: Eintrittsjalousien
- 5: Quadratlochblech
- 6: Streckmetall
- 7: Austrittsjalousien
- 8: Rahmen
- 9: Verstärkung, Verstrebung
- 10: Stützgitter
- 11: Feingitter
- 12: Feingitter (vergrößerte Darstellung)
- 13: Wanderbettadsorber gemäß Stand der Technik
- 14: 1. Bereich
- 15: 2. Bereich
- 16: 3. Bereich
- 17: 4. Bereich

- 20: Filtereinrichtung/Wanderbettadsorber gemäß der Erfindung

- 30: Elektrofilter/Reaktor
- 31: Gehäuse des Elektrofilters
- 32: Eintritt für Verbrennungsgasstrom
- 33: Austritt für Verbrennungsgasstrom
- 34: Elektrofilterfeld
- 35: Trichter/Filterstaubabzug des Elektrofilters
- 36: Austrittshaube

## Patentansprüche

1. Eine Reinigungsvorrichtung zur Abscheidung von Schadstoffen, insbesondere Schwermetall und/oder Schwermetallverbindungen, insbesondere Quecksilber und/oder Quecksilberverbindungen, aus Verbrennungsgasen, umfassend eine Filtereinrichtung enthaltend einen oder mehrere Wanderbettadsorber (20), wobei der Wanderbettadsorber (20) eingerichtet ist, von oben nach unten von Adsorbens (2) durchlaufen zu werden, und in Kreuzstromfahrweise von den Verbrennungsgasen (3) durchströmt zu werden, **dadurch gekennzeichnet, dass** der Wanderbettadsorber (20) mindestens ein von Adsorbens (2) durchlaufenes Filterbett (1) aufweist, das anströmseitig und abströmseitig von Feingittern (11) begrenzt ist.

2. Die Reinigungsvorrichtung gemäß Anspruch 1, **dadurch gekennzeichnet, dass** die Filtereinrichtung mehrere nebeneinander angeordnete Wanderbettadsorber (20) aufweist.

3. Die Reinigungsvorrichtung gemäß Anspruch 1, **dadurch gekennzeichnet, dass** die nebeneinander angeordneten Wanderbettadsorber (20) angewinkelt zueinander ausgerichtet sind, um die Filterfläche zu vergrößern.

4. Die Reinigungsvorrichtung gemäß irgendeinem der Ansprüche 1 bis 3, **dadurch gekennzeichnet, dass** die Feingitter (11), die das von Adsorbens (2) durchlaufene Filterbett (1) des Wanderbettadsorbers (20) begrenzen, eine Maschenweite von 1,0 mm bis 8,0 mm, bevorzugt 2,0 mm bis 4,0 mm aufweisen.

5. Die Reinigungsvorrichtung gemäß irgendeinem der Ansprüche 1 bis 4, **dadurch gekennzeichnet, dass** die Feingitter (11) durch eine außen auf den Feingittern (11) aufliegende Stützstruktur (9, 10) gestützt werden.

6. Die Reinigungsvorrichtung gemäß irgendeinem der Ansprüche 1 bis 5, **dadurch gekennzeichnet, dass** die Feingitter (11) durch außen auf den Feingittern (11) aufliegende Stützgitter (10) mit einer Maschenweite von 2,0 cm bis 50,0 cm, vorzugsweise von 2,0 cm bis 20,0 cm, weiter bevorzugt von 2,0 cm bis 5,0 cm gestützt werden.

7. Die Reinigungsvorrichtung gemäß irgendeinem der Ansprüche 1 bis 6, **dadurch gekennzeichnet, dass** die aktive Filtertiefe (1) des Wanderbettadsorbers (20) in Strömungsrichtung des Verbrennungsgasstroms (3) 20 mm bis 200 mm, bevorzugt 20 mm bis 100 mm, weiter bevorzugt 30 mm bis 70 mm beträgt.

8. Die Reinigungsvorrichtung gemäß irgendeinem der Ansprüche 1 bis 7, **dadurch gekennzeichnet, dass** die Reinigungsvorrichtung eine Höhe von 3,0 m bis 20,0 m und eine Breite von 3,0 m bis 30,0 m aufweist.

9. Die Reinigungsvorrichtung gemäß irgendeinem der Ansprüche 1 bis 8, **dadurch gekennzeichnet, dass** die Feingitter (11) und, soweit vorhanden, die außen anliegende Stützstruktur (9, 10) randseitig von einem Rahmen (8), vorzugsweise von U-Profilen (8) gehalten werden.

10. Die Reinigungsvorrichtung gemäß irgendeinem der Ansprüche 1 bis 9, **dadurch gekennzeichnet, dass** die Filtereinrichtung enthaltend einen oder mehrere Wanderbettadsorber (20) hängend angebracht ist.

11. Elektrofilter (30) zur Entfernung von Staub aus Verbrennungsgasen, umfassend ein Gehäuse (31) mit mindestens einem Eintritt (32) und mindestens einem Austritt (33) für Verbrennungsgas (3), wobei mindestens ein Elektrofilterfeld (34) zwischen Eintritt (32) und Austritt (33) für Verbrennungsgas (3) angeordnet ist, **dadurch gekennzeichnet, dass** eine Filtereinrichtung gemäß irgendeinem der Ansprüche 1 bis 10 bezogen auf den Verbrennungsgasstrom (3) stromabwärts des letzten Elektrofilterfeldes (34) und vor dem Austritt (33) im Elektrofilter so angeordnet ist, dass das Verbrennungsgas (3) in Kreuzstromfahrweise durch die Filtereinrichtung geleitet wird.

12. Reinigungsanlage zur Reinigung von Verbrennungsgasen von Verbrennungsgase zur Abscheidung von Schadstoffen, insbesondere Schwermetall und/oder Schwermetallverbindungen, insbesondere Quecksilber und/oder Quecksilberverbindungen, aus Verbrennungsgasen (3), umfassend einen einem Verbrennungskessel nachgeordneten Reaktor (30) mit einer Filtereinrichtung enthaltend einen oder mehrere Wanderbettadsorber (20), wobei der Wanderbettadsorber (20) eingerichtet ist, von oben nach unten von Adsorbens (2) durchlaufen zu werden, und in Kreuzstromfahrweise von den Verbrennungsgasen (3) durchströmt zu werden, **dadurch gekennzeichnet, dass** der Wanderbettadsorber (20) mindestens ein von Adsorbens (2) durchlaufenes Filterbett (1) aufweist, das anströmseitig und abströmseitig von Feingittern (11) begrenzt ist.

13. Ein Verfahren zur Abscheidung von Schadstoffen, bevorzugt ausgewählt aus der Gruppe bestehend aus SO₂, SO₃, HCl, HF, HBr, NOx; flüchtigen Metallen, Se, As und deren Verbindungen, vorzugsweise Schwermetall und/oder Schwermetallverbindungen, besonders bevorzugt von Quecksilber und/oder Quecksilberverbindungen, aus Verbrennungsgasen (3) unter Verwendung der Reinigungsvorrichtung gemäß irgendeinem der Ansprüche 1 bis 10 oder des Elektrofilters (30) gemäß Anspruch 11 oder der Reinigungsanlage gemäß Anspruch 12, wobei die Verbrennungsgase (3) in Kreuzstromfahrweise durch den von oben nach unten von Adsorbens (2) durchlaufenen Wanderbettadsorber (20) strömen und mindestens ein Teil der Schadstoffe, insbesondere mindestens ein Teil des Schwermetalls und/oder der Schwermetallverbindungen, insbesondere mindestens ein Teil des Quecksilbers und/oder der Quecksilberverbindungen aus dem Verbrennungsgas (3) von dem Adsorbens (2) aufgenommen wird.

14. Das Verfahren gemäß Anspruch 13, **dadurch gekennzeichnet, dass** Adsorbens (2) eingesetzt wird, das eine durchschnittliche Partikelgröße von 1,5 mm bis 15,0 mm, vorzugsweise von 2,0 mm bis 8,0 mm aufweist.

15. Das Verfahren gemäß Anspruch 13 oder 14, **dadurch gekennzeichnet, dass** Adsorbens (2) eingesetzt wird, das ausgewählt ist aus der Gruppe bestehend aus inertem Trägermaterial mit aktiver Beschichtung, auf Kohlenstoff basierte Partikel, insbesondere Aktivkohle, Zeolithen, Kalkprodukten, Ionenaustauscherharzen und Mischungen davon.
